(19) Europäisches Patentamt
European Patent Office
Office européen des brevets

(11) **EP 3 919 547 A1**

(12) **EUROPEAN PATENT APPLICATION**
published in accordance with Art. 153(4) EPC

(43) Date of publication:
08.12.2021 Bulletin 2021/49

(21) Application number: 20749789.2

(22) Date of filing: 03.02.2020

(51) Int Cl.:
*C08G 73/02* (2006.01)     *C08G 73/06* (2006.01)
*E21B 33/12* (2006.01)     *E21B 43/26* (2006.01)
*C08L 79/02* (2006.01)     *C08K 3/34* (2006.01)

(86) International application number:
**PCT/JP2020/003995**

(87) International publication number:
**WO 2020/158956 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 01.02.2019 JP 2019017378
25.09.2019 JP 2019174698

(71) Applicant: **MITSUBISHI GAS CHEMICAL COMPANY, INC.**
**Chiyoda-ku**
**Tokyo 100-8324 (JP)**

(72) Inventors:
• **SHIMADA, Masahiro**
**Tokyo 125-8601 (JP)**
• **OHNO, Daisuke**
**Tokyo 125-8601 (JP)**
• **KUMAGAI, Hiroto**
**Tokyo 125-8601 (JP)**

(74) Representative: **Müller-Boré & Partner**
**Patentanwälte PartG mbB**
**Friedenheimer Brücke 21**
**80639 München (DE)**

(54) **DEGRADABLE RESIN COMPOSITION, DEGRADABLE CURED PRODUCT AND DOWNHOLE TOOL FOR DRILLING**

(57) Disclosed are a degradable resin composition comprising a cyanate ester (A) and a compound (B) having a hydroxyl group with a hydroxyl group equivalent of less than 240 g/eq., and a degradable cured product and a downhole tool for drilling using the same.

**Description**

Technical Field

The present invention relates to a degradable resin composition that can be decomposed by hydrolysis after curing and is used for a downhole tool for drilling for recovering oil, natural gas (for example, shale gas), and the like, and to a degradable cured product and a downhole tool for drilling using the same.

Background Art

Oil or natural gas collected from subterranean formations is extracted through oil wells or gas wells called wells. As a method for efficiently extracting these natural gases from wells, for example, hydraulic fracturing and the like, which uses fluid pressure to form fines holes such as cracks in wells (downholes), has been used in recent years, in addition to acid treatments and fracturing methods.

Hydraulic fracturing is a method of using the hydraulic pressure of a fluid to generate perforations, cracks, and the like in the production layer. In recent years, a horizontal well drilling technique, which drills vertical holes and drills the holes from the vertical to the horizontal direction, is also developing. In addition, hydraulic fracturing is a technique in which a fluid such as a fracturing fluid is sent into a well at high pressure to generate cracks in a deep underground production layer (a layer producing oil or natural gas) by hydraulic pressure, and then collect the oil, natural gas, or the like via the cracks. Hydraulic fracturing is a technique also attracting interest in the development of non-conventional resources such as so-called shale gas.

In hydraulic fracturing, a part of the well hole is closed in order to efficiently generate cracks or the like in the well hole. When a part of the well hole is closed, hydraulic pressure can efficiently generate cracks or the like in the closed section. Such closing of the well hole is performed in sequence for predetermined sections when generating cracks or the like. In addition, the closing of the well hole may be performed to stimulate the production layer again on a desired section of the well hole that has already been formed, or to complete the well.

The tools used for such closing of well holes are called "downhole tool for drilling" or the like, and various tools have been developed. As such a downhole tool for drilling, for example, various tools such as a ball-shaped cured resin cured product have been developed. Moreover, the downhole tools for drilling are sequentially placed in the well until the well is completed, but it is necessary to remove them when forming a new closed section or before beginning the collection of shale gas or the like. To recover the downhole tool for drilling, a technique is used in which the tool is destroyed by a physical action such as crushing or drilling, and then recovered. However, crushing and drilling require a lot of money and time.

For such a problem, a technique has been proposed in which the downhole tool member can be easily removed under various well environmental conditions (see, for example, Patent Literatures 1 to 3 below).

Citation List

Patent Literature

[0007]

　　　Patent Literature 1: International Publication No. WO 2016/076390
　　　Patent Literature 2: International Publication No. WO 2015/099005
　　　Patent Literature 3: U.S. Patent No. 2016/0369083

Summary of Invention

Technical Problem

The above-mentioned Patent Literatures 1 and 2 describes that a downhole tool member can be easily removed under various well environmental conditions, as necessary. Moreover, Patent Literature 3 is a technique using degradable glass, which is a technique for adjusting the degradation rate by changing the content of the degradable glass component in addition to the resin. However, for the downhole tools for drilling used for closing well holes, there is a strong demand for a further improvement of the technique allowing to easily remove them after use.

In order to solve the above-mentioned problems, the present invention aims to provide a degradable resin composition capable of providing a degradable cured product having a controlled hydrolysis rate, and a degradable cured product and downhole tool for drilling using the degradable resin composition.

Solution to Problem

<1> A degradable resin composition comprising a cyanate ester (A) and a compound (B) having a hydroxyl group with a hydroxyl group equivalent of less than 240 g/eq.

<2> The degradable resin composition according to <1>, wherein the compound (B) comprises a polyol having two or more hydroxyl groups in one molecule.

<3> The degradable resin composition according to <1> or <2>, wherein the compound (B) comprises at least one or more compounds selected from a compound having an alcoholic hydroxyl group, a compound having a phenolic hydroxyl group, and a compound having an alcoholic hydroxyl group and a phenolic hydroxyl group.

<4> The degradable resin composition according to any one of <1> to <3>, wherein the compound (B) comprises at least one selected from the group consisting of an aliphatic polyol (b1), an alicyclic polyol (b2), an aromatic polyol (b3), and a trialkanolamine (b4).

<5> The degradable resin composition according to <4>, wherein the aliphatic polyol (b1) comprises at least one selected from the group consisting of ethanediol, propanediol, propanetriol, propanetetraol, butanediol, butanetriol, butanetetraol, pentanediol, pentanetriol, pentanetetraol, pentanepentaol, hexanediol, hexanetriol, hexanetetraol, hexanepentaol, hexanehexaol, diglycerol, ditrimethylolpropane, tritrimethylolpropane, dineopentylglycol, dipentaerythritol, tripentaerythritol, polyvinyl alcohol and polyvinyl acetal.

<6> The degradable resin composition according to <4> or <5>, wherein the alicyclic polyol (b2) comprises at least one selected from the group consisting of cyclopentanediol, cyclopentanetriol, cyclopentanetetraol, cyclopentanepentaol, cyclohexanediol, cyclohexanetriol, cyclohexanetetraol, cyclohexanepentaol, cyclohexanehexaol, hydrogenated bisphenol A, hydrogenated bisphenol B, hydrogenated bisphenol C, hydrogenated bisphenol E, hydrogenated bisphenol F, decahydronaphthalenediol, decahydronaphthalenetriol, and decahydronaphthalenetetraol.

<7> The degradable resin composition according to any one of <4> to <6>, wherein the aromatic polyol (b3) comprises at least one selected from the group consisting of dihydroxybenzene, trihydroxybenzene, tetrahydroxybenzene, pentahydroxybenzene, hexahydroxybenzene, bisphenol A, bisphenol B, bisphenol C, bisphenol E, bisphenol F, dihydroxybiphenyl, naphthalenediol, naphthalenetriol, and naphthalenetetraol.

<8> The degradable resin composition according to any one of <4> to <7>, wherein the trialkanolamine (b4) comprises at least one selected from the group consisting of trimethanolamine, triethanolamine, tripropanolamine, triisopropanolamine and tributanolamine.

<9> The degradable resin composition according to any one of <1> to <8>, further comprising at least any one of an inorganic filler and an organic filler as a filler.

<10> The degradable resin composition according to <9>, wherein the filler is a salt.

<11> The degradable resin composition according to <10>, wherein the salt is an alkali metal salt.

<12> The degradable resin composition according to <11>, wherein the alkali metal salt is water-soluble.

<13> The degradable resin composition according to any one of <9> to <12>, wherein the filler comprises: at least one of a hydrolyzable filler and a soluble filler; and a non-degradable filler.

<14> The degradable resin composition according to any one of <1> to <13>, wherein the equivalent ratio [OH/OCN] between the cyanato group [OCN] in the cyanate ester (A) and the hydroxyl group [OH] of the compound (B) is 0.02 to 1.0.

<15> The degradable resin composition according to any one of <1> to <14>, wherein a cured product obtained by curing the degradable resin composition is a degradable cured product that is degraded by hydrolysis.

<16> The degradable resin composition according to <15>, wherein the retention rate of the breaking stress $S_1$ after the hydrolysis treatment (24 hours) of the degradable cured product with respect to the breaking stress $S_0$ before the hydrolysis treatment is 90% or less.

<17> A degradable cured product obtained by curing the degradable resin composition according to any one of <1> to <14>.

<18> The degradable cured product according to <17>, which is degraded by hydrolysis.

<19> A downhole tool for drilling comprising the degradable cured product according to <17> or <18>.

Advantageous Effects of Invention

According to the present invention, it is possible to provide a degradable resin composition capable of providing a degradable cured product having a controlled hydrolysis rate, and a degradable cured product and downhole tool for drilling using the degradable resin composition.

Description of Embodiments

Hereinafter, the degradable resin composition, the degradable cured product, and the downhole tool for drilling of the present invention will be described using embodiments. However, the present invention is not limited to the following embodiments.

<<Degradable Resin Composition>>

The degradable resin composition of the present embodiment comprises a cyanate ester (A) and a compound (B) having a hydroxyl group with a hydroxyl group equivalent of less than 240 g/eq. In addition, the degradable resin composition of the present embodiment can comprise a filler, a solvent, and other additives, according to the desired purpose.

Here, the "degradable resin composition" and the "degradable cured product" mean a resin composition that is degraded by hydrolysis after being cured and a cured product thereof. It is preferable that the degradable cured product formed by using the degradable resin composition maintain its mechanical strength for a given period of time when it plays the role of closing the well hole while in contact with a fluid such as a fracturing fluid, and then have its mechanical strength decrease (for example, the breaking stress decrease) and degrade (break into fragments) after the desired period of time has elapsed. According to the present embodiment, it is possible to provide a downhole tool for drilling which can be easily removed after being used for closing a well hole for a given period of time, by using a degradable resin composition comprising the cyanate ester (A) and the compound (B) having a hydroxyl group with a hydroxyl group equivalent of less than 240 g/eq., and curing it to obtain a degradable cured product. Therefore, according to the downhole tool for drilling of the present embodiment, it is possible to contribute to cost reduction and shortening of process of well drilling.

(Cyanate Ester (A))

The degradable resin composition of the present embodiment includes a cyanate ester (A). The "cyanate ester (A)" in the present embodiment is a resin having in the molecule an aromatic moiety substituted by at least one cyanato group (cyanate ester group), and can be used without being particularly limited as long as it is the resin.

The cyanate ester (A) is not particularly limited, and the cyanate ester compounds described in International Publication No. WO 2017/135168 can be used. Examples thereof include cyanatobenzene, 1-cyanato-2-, 1-cyanato-3-, or 1-cyanato-4-methylbenzene, 1-cyanato-2-, 1-cyanato-3-, or 1-cyanato-4-methoxybenzene, 1-cyanato-2,3-, 1-cyanato-2,4-, 1-cyanato-2,5-, 1-cyanato-2,6-, 1-cyanato-3,4-, or 1-cyanato-3,5-dimethylbenzene, cyanatoethylbenzene, cyanatobutylbenzene, cyanatooctylbenzene, cyanatononylbenzene, 2-(4-cyanatophenyl)-2-phenylpropane (a cyanate of 4-$\alpha$-cumylphenol), 1-cyanato-4-cyclohexylbenzene, 1-cyanato-4-vinylbenzene, 1-cyanato-2- or 1-cyanato-3-chlorobenzene, 1-cyanato-2,6-dichlorobenzene, 1-cyanato-2-methyl-3-chlorobenzene, cyanatonitrobenzene, 1-cyanato-4-nitro-2-ethylbenzene, 1-cyanato-2-methoxy-4-allylbenzene (a cyanate of eugenol), methyl(4-cyanatophenyl)sulfide, 1-cyanato-3-trifluoromethylbenzene, 4-cyanatobiphenyl, 1-cyanato-2- or 1-cyanato-4-acetylbenzene, 4-cyanatobenzaldehyde, methyl 4-cyanatobenzoate ester, phenyl 4-cyanatobenzoate ester, 1-cyanato-4-acetaminobenzene, 4-cyanatobenzophenone, 1-cyanato-2,6-di-tert-butylbenzene, 1,2-dicyanatobenzene, 1,3-dicyanatobenzene, 1,4-dicyanatobenzene, 1,4-dicyanato-2-tert-butylbenzene, 1,4-dicyanato-2,4-dimethylbenzene, 1,4-dicyanato-2,3,4-trimethylbenzene, 1,3-dicyanato-2,4,6-trimethylbenzene, 1,3-dicyanato-5-methylbenzene, 1-cyanato- or 2-cyanatonaphthalene, 1-cyanato4-methoxynaphthalene, 2-cyanato-6-methylnaphthalene, 2-cyanato-7-methoxynaphthalene, 2,2'-dicyanato-1,1'-binaphthyl, 1,3-, 1,4-, 1,5-, 1,6-, 1,7-, 2,3-, 2,6-, or 2,7-dicyanatonaphthalene, 2,2'- or 4,4'-dicyanatobiphenyl, 4,4'-dicyanatooctafluorobiphenyl, 2,4'- or 4,4'-dicyanatodiphenylmethane, bis(4-cyanato-3,5-dimethylphenyl)methane, 1,1-bis(4-cyanatophenyl)ethane, 1,1-bis(4-cyanatophenyl)propane, 2,2-bis(4-cyanatophenyl)propane, 2,2-bis(4-cyanato-3-methylphenyl)propane, 2,2-bis(2-cyanato-5-biphenylyl)propane, 2,2-bis(4-cyanatophenyl)hexafluoropropane, 2,2-bis(4-cyanato-3,5-dimethylphenyl)propane, 1,1-bis(4-cyanatophenyl)butane, 1,1-bis(4-cyanatophenyl)isobutane, 1,1-bis(4-cyanatophenyl)pentane, 1,1-bis(4-cyanatophenyl)-3-methylbutane, 1,1-bis(4-cyanatophenyl)-2-methylbutane, 1,1-bis(4-cyanatophenyl)-2,2-dimethylpropane, 2,2-bis(4-cyanatophenyl)butane, 2,2-bis(4-cyanatophenyl)pentane, 2,2-bis(4-cyanatophenyl)hexane, 2,2-bis(4-cyanatophenyl)-3-methylbutane, 2,2-bis(4-cyanatophenyl)-4-methylpentane, 2,2-bis(4-cyanatophenyl)-3,3-dimethylbutane, 3,3-bis(4-cyanatophenyl)hexane, 3,3-bis(4-cyanatophenyl)heptane, 3,3-bis(4-cyanatophenyl)octane, 3,3-bis(4-cyanatophenyl)-2-methylpentane, 3,3-bis(4-cyanatophenyl)-2-methylhexane, 3,3-bis(4-cyanatophenyl)-2,2-dimethylpentane, 4,4-bis(4-cyanatophenyl)-3-methylheptane, 3,3-bis(4-cyanatophenyl)-2-methylheptane, 3,3-bis(4-cyanatophenyl)-2,2-dimethylhexane, 3,3-bis(4-cyanatophenyl)-2,4-dimethylhexane, 3,3-bis(4-cyanatophenyl)-2,2,4-trimethylpentane, 2,2-bis(4-cyanatophenyl)-1,1,1,3,3,3-hexafluoropropane, bis(4-cyanatophenyl)phenylmethane, 1,1-bis(4-cyanatophenyl)-1-phenylethane, bis(4-cyanatophenyl)biphenylmethane, 1,1-bis(4-cyanatophenyl)cyclopentane, 1,1-bis(4-cyanatophenyl)cyclohexane, 2,2-bis(4-cyanato-3-isopropylphenyl)propane, 1,1-bis(3-cyclohexyl-4-cyanatophenyl)cyclohexane, bis(4-cyanatophenyl)diphenylmethane, bis(4-cyanatophenyl)-2,2-dichloroethylene, 1,3-bis[2-(4-cyanatophenyl)-2-propyl]benzene, 1,4-bis[2-(4-cyanatophenyl)-2-propyl]benzene, 1,1-bis(4-cyanatophenyl)-3,3,5-trimethylcyclohexane, 4-[bis(4-cyanatophenyl)methyl]biphenyl, 4,4-dicyanatobenzophenone, 1,3-bis(4-cyanatophenyl)-2-propen-1-one, bis(4-cyanatophenyl) ether, bis(4-cyanatophenyl) sulfide, bis(4-cyanatophenyl) sulfone, 4-cyanatobenzoic acid-4-cyanatophenyl ester (4-cyanatophenyl-4-cyanatobenzoate), bis-(4-cyanatophenyl) carbonate, 1,3-bis(4-cyanatophenyl)adamantane, 1,3-bis(4-cyanatophenyl)-5,7-dimethyladamantane, 1,3-bis(3-methyl-4-cyanatophenyl)-5,7-dimethyladamantane, 3,3-bis(4-cyanatophenyl)isobenzofuran-1(3H)-one (a cyanate of phenolphthalein), 3,3-bis(4-cyanato-3-methylphenyl)isobenzofuran-1(3H)-one (a cyanate of o-cresolphthalein), 9,9'-bis(4-cyanatophenyl)fluorene, 9,9-bis(4-cyanato-3-methylphenyl)fluorene, 9,9-bis(2-cyanato-5-biphenylyl)fluorene, tris(4-cyanatophenyl)methane, 1,1,1-tris(4-cyanatophenyl)ethane, 1,1,3-tris(4-cyanatophenyl)propane, α,α,α'-tris(4-cyanatophenyl)-1-ethyl-4-isopropylbenzene, 1,1,2,2-tetrakis(4-cyanatophenyl)ethane, tetrakis(4-cyanatophenyl)methane, 2,4,6-tris(N-methyl-4-cyanatoanilino)-1,3,5-triazine, 2,4-bis(N-methyl-4-cyanatoanilino)-6-(N-methylanilino)-1,3,5-triazine, bis(N-4-cyanato-2-methylphenyl)-4,4'-oxydiphthalimide, bis(N-3-cyanato-4-methylphenyl)-4,4'-oxydiphthalimide, bis(N-4-cyanatophenyl)-4,4'-oxydiphthalimide, bis(N-4-cyanato-2-methylphenyl)-4,4'-(hexafluoroisopropylidene)diphthalimide, tris(3,5-dimethyl-4-cyanatobenzyl) isocyanurate, 2-phenyl-3,3-bis(4-cyanatophenyl)phthalimidine, 2-(4-methylphenyl)-3,3-bis(4-cyanatophenyl)phthalimidine, 2-phenyl-3,3-bis(4-cyanato-3-methylphenyl)phthalimidine, 1-methyl-3,3-bis(4-cyanatophenyl)indolin-2-one, 2-phenyl-3,3-bis(4-cyanatophenyl)indolin-2-one, and a prepolymer thereof.

As the cyanate ester (A) in the present embodiment, a prepolymer of cyanate ester is preferable from the viewpoint of being able to adjust the viscosity when molten, and a prepolymer of 2,2-bis (4-cyanatophenyl)propane, a prepolymer of bis(4-cyanatophenyl)methane, a prepolymer of 1,1-bis(4-cyanatophenyl)ethane, a prepolymer of 1,1-bis(4-cyanatophenyl)-1-phenylethane, a prepolymer of 2,2-bis(4-cyanatophenyl)butane, and a prepolymer of 2,2-bis(3-methyl-4-cyanatophenyl)propane are further preferable.

The "prepolymer" means a material that is an intermediate material of a polymerization or condensation reaction of a monomer which was stopped halfway and is at a stage before becoming a polymer. The prepolymer of the cyanate ester is preferably a polymer having a weight average molecular weight (Mw) of 160 to 4000, for example.

The weight average molecular weight (Mw) of the cyanate ester (A) is not particularly limited, but can be 160 to 4000, preferably 160 to 3000, and further preferably 160 to 2000 from the viewpoint of controlling the strength and hydrolyzability of the cured product.

The cyanate equivalent of the cyanate ester (A) is not particularly limited, but can be 50 to 2000, preferably 60 to 1500, and further preferably 80 to 1000 from the viewpoint of controlling the strength and hydrolyzability of the cured product.

The "cyanate equivalent" of the cyanate ester (A) can be obtained by the following formula. Formula:

$$\text{Cyanate equivalent} = \text{Weight average molecular weight}$$
$$\text{(Mw) of cyanate ester (A) / Number of cyanato groups in}$$
$$\text{cyanate ester (A)}$$

In addition, a commercial product can be appropriately used as the cyanate ester (A) of the present embodiment. Examples of commercial products of the cyanate ester (A) include a prepolymer of 2,2-bis(4-cyanatophenyl)propane (such as CA210 (product name) and TA-1500 (product name) manufactured by Mitsubishi Gas Chemical Company, Inc).

One of the cyanate esters (A) can be used alone, or two or more of the cyanate esters (A) can be mixed and used.

The method for producing the cyanate ester (A) is not particularly limited, and a publicly known method can be used. Examples of such a production method include a method in which a hydroxyl group-containing compound having a desired skeleton is acquired or synthesized and cyanated by modifying the hydroxyl group by a publicly known method. Examples of the approach to convert hydroxyl groups to cyanato groups is include, for example, the approach described in Ian Hamerton, "Chemistry and Technology of Cyanate Ester Resins," Blackie Academic & Professional.

The content of cyanate ester (A) in the degradable resin composition is not particularly limited. For example, when no filler is used, the upper and lower limits of the contents of the cyanate ester (A) and the compound (B) described later in the degradable resin composition can be appropriately determined so that the equivalent ratio [OH/OCN] between the cyanato group [OCN] in the cyanate ester (A) and the hydroxyl group [OH] of the compound (B), which will be described later, satisfies 0.02 to 1.0. When a filler is contained in the degradable resin composition, the total mass of "cyanate ester (A) and compound (B)" is preferably 5 to 99% by mass, further preferably 10 to 99% by mass, and particularly preferably 15 to 99% by mass with respect to the total mass of "cyanate ester (A), compound (B) and filler" from the viewpoint of binding the solid contents to each other to obtain a cured product having high strength. In addition, it is preferable that the total mass of the cyanate ester (A) and the compound (B) (if a filler is used, the total mass including the filler) be 99% by mass or more with respect to the total solid content of the degradable resin composition. Throughout the present specification, the "solid content" in the composition means the solid part constituting the cured product when the degradable resin composition is cured, and means a component containing a filler when the degradable resin composition contains a filler as described above.

(Compound (B))

The degradable resin composition of the present embodiment includes a compound (B) having a hydroxyl group with a hydroxyl group equivalent of less than 240 g/eq. The compound (B) is a compound comprising a hydroxyl group as a reactive group of the cyanato group, and is a compound having a hydroxyl group equivalent of less than 240 g/eq. When the hydroxyl group equivalent of compound (B) is less than 240 g/eq., the degradability by hydrolysis of the obtained degradable cured product can be sufficiently controlled. The hydroxyl group equivalent of compound (B) is preferably 150 g/eq. or less from the viewpoint of controlling the degradability. Moreover, the hydroxyl group equivalent of compound (B) is not particularly limited, but is preferably 18 g/eq. or more, and particularly preferably 30 g/eq. or more from the viewpoint of controlling the degradability.

The "hydroxyl group equivalent" of compound (B) can be obtained by the following formula (i). Formula (i):

$$\text{Hydroxyl group equivalent = Weight average molecular weight (Mw) of compound (B) / Number of hydroxyl groups in compound (B)}$$

The compound (B) is preferably a polyol having two or more hydroxyl groups in one molecule. Here, the "polyol" is a compound having two or more hydroxyl groups in one molecule, and also includes, for example, compounds having one aromatic hydroxyl group and one aliphatic hydroxyl group, if they are compounds having two or more hydroxyl groups.

As the compound (B), at least one or more compounds selected from compounds having an alcoholic hydroxyl group, compounds having a phenolic hydroxyl group, and compounds having an alcoholic hydroxyl group and a phenolic hydroxyl group can be selected. However, the hydroxyl group of the compound (B) is not limited to an alcoholic hydroxyl group (aliphatic hydroxyl group) or a phenolic hydroxyl group (aromatic hydroxyl group). In addition, the compound (B) optionally contains a bond such as an ester or an ether, or a functional group such as an amine, or optionally contains a saturated bond or an unsaturated bond. Furthermore, the compound (B) may be used alone or in combination of two or more.

Examples of the compound having two or more alcoholic hydroxyl groups in one molecule include an aliphatic polyol, an alicyclic polyol, and a trialkanolamine.

The aliphatic polyol may be any of a divalent polyol, a trivalent polyol, a tetravalent polyol, a polyvalent polyol and the like.

Examples of the divalent polyol include an alkylene glycol such as ethanediol, propanediol, propanetriol, propanetetraol, butanediol, butanetriol, butanetetraol, pentanediol, pentanetriol, pentanetetraol, pentanepentaol, hexanediol, hexanetriol, hexanetetraol, hexanepentaol, hexanehexaol (including structural isomers), and dehydrated condensates of two or more molecules of these alkylene glycols (diethylene glycol, dipropylene glycol, tripropylene glycol, etc.).

Examples of the trivalent polyol include glycerol, trimethylolpropane, trimethylolethane, and 1,2,6-hexanetriol.

Examples of the tetravalent polyol include pentaerythritol and diglycerol.

Examples of the polyvalent polyol include polyvinyl alcohol and partial acetals of polyvinyl alcohol (for example, polyvinyl formal, and polyvinyl butyral).

Examples of the alicyclic polyol include a polyol such as cyclopentanediol, cyclopentanetriol, cyclopentanetetraol, cyclopentanepentaol, cyclohexanediol, cyclohexanetriol, cyclohexanetetraol, cyclohexanepentaol, cyclohexanehexaol (including the structural isomers thereof) and a polyol having an adamantane or norbornene structure; a bisphenol such as bisphenol A, bisphenol E, bisphenol F, and bisphenol AF, which are aromatic polyols; a biphenyl such as dihydroxybiphenyl; a polyvalent phenol such as hydroquinone, and phenol-formaldehyde condensates; and a compound in which an aromatic ring is hydrogenated such as naphthalenediol, catechol, resorcinol, hydroquinone, pyrogallol and hexahydroxybenzene.

Examples of alkanolamines particularly include tertiary alkanolamines (trialkanolamines) which have a small hydroxyl group equivalent, and for example, triisopropanolamine and triethanolamine can be used. In addition, examples of compounds having other functional groups include monosaccharides, oligosaccharides, and polysaccharides as saccharides.

Examples of the compound having a phenolic hydroxyl group (aromatic polyol) include dihydroxybenzene, trihydroxybenzene, tetrahydroxybenzene, pentahydroxybenzene, hexahydroxybenzene (including the structural isomers thereof), and a bisphenol such as bisphenol A, bisphenol F, and bisphenol AF; a biphenyl such as dihydroxybiphenyl; a polyvalent phenol such as hydroquinone and phenol-formaldehyde condensates; and naphthalenediol.

Examples of the compound having an alcoholic hydroxyl group and a phenolic hydroxyl group in one molecule include vanillyl alcohol (4-hydroxy-3-methoxybenzyl alcohol), salicyl alcohol, and gastrodigenin.

In addition, while specific examples overlap with those described above, preferred aspects of the compound (B) can also be considered from the viewpoint of an aliphatic polyol (b1), an alicyclic polyol (b2), an aromatic polyol (b3), and a trialkanolamine (b4).

The aliphatic polyol (b1) is, for example, preferably at least one selected from the group consisting of ethanediol, propanediol, propanetriol, propanetetraol, butanediol, butanetriol, butanetetraol, pentanediol, pentanetriol, pentanetetraol, pentanepentaol, hexanediol, hexanetriol, hexanetetraol, hexanepentaol, hexanehexaol, diglycerol, ditrimethylolpropane, tritrimethylolpropane, dineopentylglycol, dipentaerythritol, tripentaerythritol, polyvinyl alcohol and polyvinyl acetal. When these aliphatic polyols have structural isomers, the structural isomers are included.

The alicyclic polyol (b2) is, for example, preferably at least one selected from the group consisting of cyclopentanediol, cyclopentanetriol, cyclopentanetetraol, cyclopentanepentaol, cyclohexanediol, cyclohexanetriol, cyclohexanetetraol, cyclohexanepentaol, cyclohexanehexaol, hydrogenated bisphenol A, hydrogenated bisphenol B, hydrogenated bisphenol C, hydrogenated bisphenol E, hydrogenated bisphenol F, decahydronaphthalenediol, decahydronaphthalenetriol, and decahydronaphthalenetetraol. When these alicyclic polyols have structural isomers, the structural isomers are included.

The aromatic polyol (b3) is, for example, preferably at least one selected from the group consisting of dihydroxybenzene, trihydroxybenzene, tetrahydroxybenzene, pentahydroxybenzene, hexahydroxybenzene, bisphenol A, bisphenol B, bisphenol C, bisphenol E, bisphenol F, dihydroxybiphenyl, naphthalenediol, naphthalenetriol, and naphthalenetetraol. When these aromatic polyols have structural isomers, the structural isomers are included.

The trialkanolamine (b4) is, for example, preferably at least one selected from the group consisting of trimethanolamine, triethanolamine, tripropanolamine, triisopropanolamine and tributanolamine.

The mass ratio of the cyanate ester (A) described above and the compound (B) is not particularly limited and can be appropriately determined according to the temperature of the well and the components of the fluid to be used, but is preferably (A):(B) = 99:1 to 1:99 from the viewpoint of controlling the degradability. The equivalent ratio between the cyanato group [OCN] in the cyanate ester (A) and the hydroxyl group [OH] of the compound (B) in the degradable resin composition is also not particularly limited, but is preferably [OH/OCN] = 0.02 to 1.0, further preferably 0.02 to 0.8, and particularly preferably 0.02 to 0.5 from the viewpoint of controlling the degradability.

Here, the equivalent ratio [OH/OCN] between the cyanato group [OCN] and the hydroxyl group [OH] of the compound (B) in the degradable resin composition can be calculated as follows.

```
[OH/OCN] =

[Polyol ratio (% by mass) / hydroxyl group equivalent] /

[cyanate ratio (% by mass) / cyanate equivalent]
```

In the above formula, the polyol ratio (% by mass) and cyanate ratio (% by mass) can be obtained as follows.

```
     Polyol ratio (% by mass)

= Content (mass) of compound (B) in composition / Total

content (mass) of cyanate ester (A) and compound (B) in

composition
```

```
Cyanate ratio (% by mass)

= Content (mass) of cyanate ester (A) in composition /

Total content (mass) of cyanate ester (A) and compound

(B) in composition
```

The combination of the cyanate ester (A) and the compound (B) is not particularly limited and can be appropriately determined according to the temperature of the well and the components of the fluid to be used, but, for example, a combination of a prepolymer of 2,2-bis(4-cyanatophenyl)propane as the cyanate ester (A) and at least one compound selected from trimethylolpropane, 1,4-cyclohexanediol, 2,2'-bis(4-hydroxyphenyl)propane (bisphenol A), and triisopropanolamine as the compound (B) is preferable from the viewpoint of controlling the degradability and the mechanical strength and heat resistance of the cured product.

(Filler)

The degradable resin composition of the present embodiment can include a filler. By comprising a filler, the mechanical strength and heat resistance of the obtained cured product can be improved. As the filler, at least any one of an inorganic filler and an organic filler can be included.

Examples of the inorganic filler include, but are not particularly limited to, silica such as natural silica, fused silica, synthetic silica, amorphous silica, Aerosil, and hollow silica, oxides such as white carbon, titanium white, zinc oxide, magnesium oxide, and zirconium oxide, boron nitride, agglomerated boron nitride, silicon nitride, aluminum nitride, barium sulfate, metal hydrates such as aluminum hydroxide, heat treated products of aluminum hydroxide (products obtained by subjecting aluminum hydroxide to a heat treatment to reduce a part of crystal water), boehmite, and magnesium hydroxide, molybdenum compounds such as molybdenum oxide and zinc molybdate, zinc borate, zinc stannate, alumina, clay, kaolin, talc, calcined clay, calcined kaolin, calcined talc, mica, E-glass, A-glass, NE-glass, C-glass, L-glass, D-glass, S-glass, M-glass G-20, glass fiber (including glass fine powders of E glass, T glass, D glass, S glass, Q glass, and the like), hollow glass, spherical glass, soda glass, and alkali metal salts containing an alkali metal ion as the constituting ion.

Specifically, the alkali metal salt is an alkali metal salt with an inorganic or organic acid such as sulfuric acid, hydrochloric acid, phosphoric acid, carbonic acid, silicic acid, metasilicic acid, orthosilicic acid, acetic acid, citric acid, and oxalic acid, and examples thereof include lithium sulfate, lithium chloride, trilithium phosphate, lithium carbonate, lithium hydrogen carbonate, lithium silicate, lithium metasilicate, lithium orthosilicate, lithium acetate, lithium citrate, lithium oxalate; sodium sulfate, sodium sulfite, sodium chloride, trisodium phosphate, sodium carbonate, sodium hydrogen carbonate, sodium silicate, sodium metasilicate, sodium orthosilicate, sodium acetate, sodium citrate, sodium oxalate; potassium sulfate, potassium sulfite, potassium chloride, tripotassium phosphate, potassium carbonate, potassium hydrogen carbonate, potassium silicate, potassium metasilicate, potassium orthosilicate, potassium acetate, potassium citrate, and potassium oxalate.

In particular, preferred examples include sodium sulfate, sodium sulfite, sodium chloride, sodium silicate, sodium metasilicate, sodium acetate, sodium oxalate, potassium sulfate, potassium sulfite, potassium chloride, potassium silicate, potassium metasilicate, potassium acetate, and potassium oxalate.

Examples of the organic filler include, but are not particularly limited to, rubber powder such as styrene-based, butadiene-based, and acryl-based, core-shell type rubber powder, silicone resin powder, silicone rubber powder, and silicone composite powder.

These fillers may be surface-treated with a silane coupling agent or the like.

Fillers having various shapes such as fibrous, scaly, plate-like, needle-like, spherical, or amorphous can be used in order to balance the filling amount and the mechanical strength. In addition, fillers of different shapes may be appropriately used in combination.

In the present specification, the "fibrous", "scaly", "plate-like", and "needle-like" fillers refer to fillers having a ratio of the average length of the filler to the average thickness (aspect ratio) of 1.5 or more. The aspect ratio of fibrous, scaly, plate-like, and needle-like fillers is preferably 5 or more, and from the viewpoint of improving mechanical strength, more preferably 10 or more, and further preferably 100 or more.

The aspect ratio of the filler can be determined from the mean value of the thickness and length of 1000 fillers measured by an electron microscope (SEM).

The fibrous filler is preferably mixed in the powder in a monodisperse state, but may be mixed in a state where the fibrous fillers are entangled with each other, or in a bundle in which a plurality of fibrous fillers are aligned in the same direction. Moreover, in the monodisperse state, the orientation of the fibrous fillers may be aligned in the same direction.

In the present specification, the "spherical" and "amorphous" fillers refer to fillers having an aspect ratio of less than 1.5. From the viewpoint of the dispersibility of the filler and suppressing a decrease in the strength of the resin composition, those having a particle size of 0.1 $\mu$m to 500 $\mu$m are preferable.

If the particle size of the filler is smaller than 0.1 $\mu$m, monodisperse may be difficult. In addition, if the particle size of the filler is larger than 500 $\mu$m, the strength of the resin composition may decrease when the strength of the filler is poor. From the viewpoint of the dispersibility of the filler and the decrease in the strength of the resin composition, the particle size is further preferably 0.1 $\mu$m to 400 $\mu$m, and particularly preferably 0.1 $\mu$m to 300 $\mu$m.

In addition, from the viewpoint of each shape of the filler, the average length is not particularly limited, but is preferably about 0.1 $\mu$m to 30 $\mu$m in the case of a plate-like filler. Moreover, the particle size is preferably 0.1 $\mu$m to 50 $\mu$m or less in the case of a granular filler.

In the present embodiment, when alkali metal silicates such as sodium silicate, sodium metasilicate and sodium orthosilicate; and halogenated alkali metal salts such as sodium chloride and potassium chloride, which were mentioned above, are appropriately used as a filler, the effect of the hydrolysate and the dissolution of the filler itself in water or the like can accelerate the degradation of the resin in the degradable cured product, and allows to control the degradability of the degradable cured product.

Hereinafter, a filler capable of accelerating the degradation of a degradable cured product and the like by breaking the bonds in the resin of the degradable cured product or by degrading or dissolving the filler itself may be referred to as a "resin degradation accelerating filler". In the degradable cured product and the like of the present embodiment, when the bonds and the like in the resin are lost, the bonding state resulting from the mechanical bonds, and the chemical and physical interactions in the degradable cured product are lost, causing a reduction in weight and mechanical strength of the degradable cured product at the initial stage of production.

As will be described later, typical examples of the resin degradation accelerating filler include a "hydrolyzable filler" which is hydrolyzable and whose hydrolysate is acidic or basic, and a "soluble filler" which is soluble in the water and various solvents used in hydraulic fracturing. For example, a salt can be used as these fillers, and an alkali metal salt can be used as the salt. Examples of the alkali metal salt include the above-mentioned alkali metal salts, among which a water-soluble alkali metal salt can be used, for example. However, the resin degradation accelerating filler is not limited thereto.

Examples of the method for breaking the bonds in the resin using the resin degradation accelerating filler as described above include a method using a filler which is hydrolyzed by the water used for hydraulic fracturing to produce an acidic or basic hydrolysate.

As described above, in the present specification, a filler which is hydrolyzable and whose hydrolysate is acidic or basic may be referred to as a "hydrolyzable filler". In addition, in order to increase the degradation rate of the resin in the cured product by using the hydrolyzable filler, it is preferable that the hydrolysate of the filler have a strong acidity or basicity.

Furthermore, in order to increase the degradation rate of the cured product of the present embodiment by using the hydrolyzable filler, it is preferable that the hydrolysate of the resin in the cured product have a strong acidity or basicity.

Sodium oxalate, sodium silicate, sodium metasilicate and the like can be used as the hydrolyzable filler whose hydrolysate is acidic or basic. These hydrolyzable fillers are preferable because their hydrolysate has a particularly high acidity/basicity, which allows to degrade the resin more rapidly.

Next, in order to accelerate the degradation of the degradable cured product by degrading or dissolving the filler itself during hydraulic fracturing or the like, a method using a filler that dissolves in water and various solvents can be mentioned. As described above, in the present specification, a filler which is soluble in the water and various solvents used in hydraulic fracturing may be referred to as a "soluble filler". As the soluble filler, it is preferable to use a filler having solubility in water in particular. If safety and ease of handling during use are desired, as the soluble filler having solubility in water, it is preferable to use a water-soluble alkali metal salt or the like such as sodium chloride and potassium chloride, whose degradation products are neutral in water.

In the present embodiment, in order to control the degradability and mechanical strength of the degradable cured product and the like at a chosen time, a filler which is not hydrolyzable or does not dissolve in the fluid used during hydraulic fracturing such as water and various solvents, may be used in combination with a hydrolyzable filler or a soluble filler, or alone. Hereinafter, a filler which does not exhibit hydrolyzability and does not exhibit solubility in water or solvents (particularly water) may be referred to as a "non-degradable filler".

The non-degradable filler is preferably a filler that does not hydrolyze or dissolve even 4 hours after 15 g of a sample is submerged in 100 mL of water in an environment of 25°C then raised to 100°C. Here, the "filler that does not hydrolyze nor dissolve" means that the dry mass of the filler does not decrease by 1% by mass or more after the above-mentioned 4 hours have passed.

Examples of the non-degradable filler include, but are not particularly limited to, the above-mentioned silica such as natural silica, fused silica, synthetic silica, amorphous silica, Aerosil, and hollow silica, oxides such as white carbon, titanium white, zinc oxide, magnesium oxide, and zirconium oxide, boron nitride, agglomerated boron nitride, silicon nitride, aluminum nitride, barium sulfate, metal hydrates such as aluminum hydroxide, heat treated products of aluminum hydroxide (products obtained by subjecting aluminum hydroxide to a heat treatment to reduce a part of crystal water), boehmite, and magnesium hydroxide, molybdenum compounds such as molybdenum oxide and zinc molybdate, zinc borate, zinc stannate, alumina, clay, kaolin, talc, calcined clay, calcined kaolin, calcined talc, mica, E-glass, A-glass, NE-glass, C-glass, L-glass, D-glass, S-glass, M-glass G-20, glass fibers (including glass fine powders of E glass, T glass, D glass, S glass, Q glass, and the like), hollow glass, spherical glass, soda glass, rubber powder such as styrene-based, butadiene-based, and acryl-based, core-shell type rubber powder, silicone resin powder, silicone rubber powder, and silicone composite powder. These fillers may be surface-treated with a silane coupling agent or the like.

As described above, the filler in the degradable resin composition of the present embodiment can include: at least one of a hydrolyzable filler and a soluble filler; and a non-degradable filler. Examples of a combination of a hydrolyzable filler or a soluble filler with a non-degradable filler include a combination of a hydrolyzable filler with a non-hydrolyzable filler, a combination of a filler which is soluble in water or a solvent with a filler which is not soluble in water or a solvent, and a combination of a filler which chemically reacts or solvates with a solvent, with a filler which does not chemically react or solvate with a solvent. Specific examples of the combination of a hydrolyzable filler with a non-degradable filler include a combination of sodium silicate with glass fiber, a combination of sodium oxalate with glass fiber, and a combination of sodium metasilicate with glass fiber. Examples of the combination of a soluble filler with a non-degradable filler include a combination of sodium chloride with glass fiber, and a combination of potassium chloride with glass fiber.

It is not essential to use a filler in the present embodiment. However, if the degradable resin composition includes a filler, the amount of filler in the composition is not particularly limited, but from the viewpoint of controlling the strength and degradability, for example, the content of the filler with respect to the total mass of the cyanate ester (A), the compound (B) and the filler can be more than 0% by mass to 99% by mass, and preferably 1 to 95% by mass, further preferably 1 to 90% by mass, and particularly preferably 1 to 85% by mass.

<<Preparation of the Degradable Resin Composition>>

As a method for preparing the degradable resin composition in the present embodiment, a publicly known method for preparing a resin composition used for well drilling can be used. For example, the composition is prepared by mixing the above-mentioned cyanate ester (A) and compound (B) all at once or in several parts, at room temperature or under heating, as necessary. Shear force may be applied when mixing, or all or some of the composition components may be molten and mixed under heating. Pellets may be adjusted in consideration of handleability and the like. It is desirable to knead the degradable resin composition for well drilling according to the present embodiment under high shear from the viewpoint that it can have higher resistance to impact and the like. As a device for kneading under high shear, a twin-screw kneading extruder and the like can be used.

(Additives)

The degradable resin composition in the present embodiment may include various additives such as a chain extender, a stabilizer, a degradation accelerator or a degradation inhibitor, a reinforcing material or a colorant such as a pigment, a plasticizer, and a nucleating agent, another resin material such as a degradable resin, or an impact resistance improving agent as other blend components, within the range not inhibiting the objects of the present embodiment.

The content of the other blend components can be appropriately determined according to the type and purpose of each. Furthermore, a resin improver, a mold corrosion inhibitor such as zinc carbonate and nickel carbonate, a lubricant, an ultraviolet absorber, a nucleating agent such as boron nitride, a flame retardant and the like can be appropriately added to the degradable resin composition, and the contents and blending methods thereof can follow the above description.

<<Degradable cured product and downhole tool for drilling>>

The degradable cured product of the present embodiment may be in the form of, for example, a sheet (thin film, thick plate, etc.), a rod (round bar, prism, etc.), a rectangular parallelepiped (including a cube), or a mass (delomorphous, amorphous, etc.), or may be a formed article having a predetermined shape. When the degradable cured product is in the form of a sheet, or is a sealant or a packing material (filler-like), it does not have to be a formed article having a predetermined shape.

The degradable cured product of the present embodiment is produced by curing the above-mentioned degradable resin composition. The method for producing the degradable cured product is not particularly limited, and for example, injection molding, extrusion molding (including solidification extrusion molding), centrifugal molding, compression molding and other publicly known molding methods can be used to obtain a formed article of a desired shape. In the method, after forming the preformed article and machining, boring or the like as necessary, this itself can be combined by a publicly known method to obtain a downhole tool for drilling.

The degradable cured product of the present embodiment includes a resin cured by reacting the cyanato group of the cyanate ester (A) in the present embodiment with the hydroxyl group of the compound (B) in the present embodiment. Since the degradable cured product of the present embodiment is a reaction product of the cyanate ester (A) and the compound (B), it has better degradability after hydrolysis treatment as compared with a cured product obtained by curing the cyanate ester (A) alone or with a catalyst.

According to the present embodiment, it is possible to provide a downhole tool for drilling which has excellent mechanical properties and heat resistance as a degradable cured product formed from the degradable resin composition, and can be easily removed as necessary after the well drilling process is completed. The type, shape and size of the downhole tool for drilling are not particularly limited.

The shape and size of the downhole tool for drilling are not particularly limited, but are preferably usable for closing a well hole. Examples of the shape of the downhole tool for drilling include a ball (ball sealer) and a ball sheet, as well as a mandrel, a slip, a wedge, and a ring, which are known as members of a bridge plug. Moreover, the size of the downhole tool for drilling can be appropriately selected according to the well hole and the like.

The hydrolysis rate of the degradable cured product (and the downhole tool for drilling) is controlled, and for example, the retention rate of the breaking stress after the hydrolysis treatment after a predetermined time has elapsed with respect to the breaking stress before the hydrolysis treatment can be set to a certain percentage or less. The retention rate of the breaking stress $S_1$ after the hydrolysis treatment for a predetermined time x with respect to the breaking stress $S_0$ before the hydrolysis treatment (that is, the breaking stress at 0 hours) can be obtained from Retention rate (%) = ($S_1 \times 100$) / $S_0$. The breaking stress (25°C) of the degradable cured product can be measured by the method of JIS K 6911.

When a hydrolysis treatment (121°C, 2 atm (saturated steam atmosphere)) of 24 hours [hereinafter, may be referred to as "hydrolysis treatment (x hours)" according to the treatment time x ] is performed on the degradable cured product (and the downhole tool for drilling), the retention rate of the breaking stress $S_1$ after the hydrolysis treatment (24 hours) with respect to the breaking stress $S_0$ before the hydrolysis treatment is preferably 90% or less from the viewpoint of easy removal after the well drilling process is completed.

(Well Drilling Method)

As described above, for example, in hydraulic fracturing, a part of the well hole is closed in order to efficiently generate cracks or the like in the well hole. The downhole tool for drilling of the present embodiment is preferably used for such closing of a well hole. In this case, first, the downhole tool for drilling (having, for example, a ball shape) of the present embodiment is placed at a predetermined portion of the well hole. As a result, the space between the downhole tool for drilling and the well hole (downhole) is closed, and the fracturing fluid injected from above ground can be blocked in a predetermined section. After the well treatment such as the fracturing of various sections to cause cracks and the like in the well hole is completed, it is necessary to remove the downhole tool for drilling that is closing the well hole before starting the treatment of the next zone, or at the latest, before starting the production of oil, natural gas, and the like. The downhole tool for drilling of the present embodiment is designed so that hydrolysis is promoted by the fracturing fluid and the breaking stress is reduced after a predetermined time. Therefore, by designing so that the breaking stress of the downhole tool for drilling is reduced enough for the downhole tool for drilling to be degraded (broken into fragments) by the hydraulic pressure of the fracturing fluid after the desired period of time has elapsed, it is possible to easily degrade and remove the downhole tool for drilling after the well treatment is completed.

As a result, according to the well drilling method of the present embodiment, the many costs and time which were previously required to remove, recover, break down or break into fragments by fracturing, boring or otherwise the plurality of downhole tools for drilling left in the well after the completion of the well treatment or the completion of the well are no longer required, which allows to reduce the costs and shorten the process of well drilling.

The control of the hydrolysis rate (control of the range of variation (retention rate) of the breaking stress) of the downhole tool for drilling (degradable cured product) can be done by adjusting the type of cyanate ester (A) and compound (B), the hydroxyl group equivalent of compound (B), and the like.

As for the degradation of the degradable cured product (downhole tool for drilling) of the present embodiment, another fluid may be separately injected for degradation under different conditions from the fracturing fluid.

It is preferable that the downhole tool for drilling remaining after the well treatment is completed be completely eliminated before starting the production, but even if it is not completely eliminated, if it collapses due to a reduction of strength and to stimuli such as water flow in the downhole, the degradable seal member for the collapsed downhole tool can be easily recovered by flowback and the like, and does not cause clogging of the downhole or fracture, and therefore does not hinder the production of oil, natural gas, and the like. In general, the higher the temperature inside the well, the more the degradation and strength reduction of the downhole tool for drilling progresses in a short time. Depending on the well, the water content in the stratum may be low. In that case, it is possible to accelerate the degradation of the downhole tool for drilling by leaving the water-based fluid used during fracturing in the well without recovering it after fracturing.

Examples

The present invention will now be specifically described using examples. However, the present invention is not limited to the following examples.

[Example 1]

(Preparation of the Degradable Resin Composition)

To a resin container (internal capacity: 500 ml) equipped with a stirrer, 10.0 g of trimethylolpropane (manufactured by FUJIFILM Wako Pure Chemical Corporation) was added as an aliphatic polyol, 90.0 g of a prepolymer of 2,2-bis(4-cyanatophenyl)propane (cyanate equivalent: 139) (manufactured by Mitsubishi Gas Chemical Company, Inc., CA210 (product name)) was added as a cyanate ester compound, 0.03 g of zinc octylate was added, and then the mixture was diluted with methyl ethyl ketone (hereinafter, may be referred to as "MEK") and stirred at room temperature to obtain a varnish (solution of degradable resin composition). The varnish was dried by heating at 170°C to obtain a degradable resin composition from which MEK has been removed.

[Example 2]

A degradable resin composition was prepared in the same manner as in Example 1 except that trimethylolpropane was changed to 5.0 g, CA210 to 95.0 g, and zinc octylate to 0.01 g.

[Example 3]

A degradable resin composition was prepared in the same manner as in Example 1 except that 10.0 g of 1,4-cyclohexanediol (manufactured by Tokyo Chemical Industry Co., Ltd.) was used as an aliphatic polyol instead of trimethylolpropane, and CA210 was changed to 90.0 g and zinc octylate to 0.01 g.

[Example 4]

A degradable resin composition was prepared in the same manner as in Example 1 except that 10.0 g of 2,2'-bis(4-hydroxyphenyl)propane (bisphenol A) was used as an aromatic polyol instead of trimethylolpropane, and CA210 was changed to 90.0 g and zinc octylate to 0.01 g.

[Example 5]

A degradable resin composition was prepared in the same manner as in Example 1 except that 5.1 g of triisopropanolamine (manufactured by Tokyo Chemical Industry Co., Ltd.) was used as a trialkanolamine instead of trimethylolpropane, CA210 was changed to 94.9 g and no zinc octylate was used.

[Comparative Example 1]

A degradable resin composition was prepared in the same manner as in Example 1 except that no polyol was added, CA210 was changed to 100.0 g, and zinc octylate to 0.025 g.

[Comparative Example 2]

A degradable resin composition was prepared in the same manner as in Example 1 except that 10.0 g of bisphenol A epoxy acrylate (manufactured by Japan U-pica.co.ltd) was used as an aromatic polyol having a hydroxyl group equivalent of 240 g/eq. or more, and CA210 was changed to 90.0 g and zinc octylate to 0.015 g.

<<Fabrication of Degradable Cured Product for Evaluation>>

The obtained degradable resin compositions were filled in a mold made of SUS304 and cured by a press molding machine at a pressure of 30 kgf/cm$^2$ and a temperature of 220°C for 90 minutes. After curing, the mold made of SUS304 was removed to obtain a cured plate.

From the obtained degradable cured products, samples (degradable cured products) of 50 mm × 10 mm × 1.5 mm or 40 mm × 10 mm × 1.5 mm were cut out and various measurements were performed.

(Measurement of Three Point Bending Breaking Stress)

The breaking stress at 25°C was measured by the method of JIS K 6911 for the obtained samples (degradable cured products).

(Evaluation of hydrolyzability (breaking stress retention rate))

The obtained samples (degradable cured products) were arranged on a SUS304 tray, and a hydrolysis treatment (hereinafter, abbreviated as PCT treatment) was performed for a predetermined time (12 hours, 24 hours, or 48 hours) according to each sample at 121°C and 2 atm (saturated steam atmosphere) using a pressure cooker tester (manufactured by HIRAYAMA Manufacturing Corporation, model: PC242HS).

The samples were taken out after the predetermined time had elapsed to measure the above-mentioned three point bending breaking stress, and calculate the retention rate (%) when the breaking stress at 0 hours is set to 100. For example, the retention rate of the breaking stress $S_1$ after the hydrolysis treatment (24 hours) with respect to the breaking stress $S_0$ before the hydrolysis treatment (that is, the breaking stress at 0 hours) of the samples can be obtained from Retention rate (%) = ($S_1$ × 100) / $S_0$.

[Table 1]

| | | Example 1 | Example 2 | Example 3 | Example 4 | Example 5 |
|---|---|---|---|---|---|---|
| Polyol | | Trimethylol propane | Trimethylol propane | 1,4-Cyclohexanediol | Bisphenol A | Triisopropanol amine |
| Hydroxyl Group Equivalent | | 44.7 | 44.7 | 58.1 | 114.1 | 63.8 |
| Cyanate Ratio (% by mass) | | 90.0 | 95.0 | 90.0 | 90.0 | 94.9 |
| Polyol Ratio (% by mass) | | 10.0 | 5.0 | 10.0 | 10.0 | 5.1 |
| [OH/OCN] | | 0.346 | 0.164 | 0.266 | 0.135 | 0.117 |
| Three Point Bending Breaking Stress (MPa) | PCT Treatment Time (hr.) | | | | | |
| | 0 | 117 | 160 | 135 | 175 | 152 |
| | 12 | 80 | 147 | 90 | 133 | 101 |
| | 24 | 43 | 133 | 87 | 119 | 76 |
| | 48 | 39 | 98 | 61 | 104 | 20 |
| Three Point Bending Breaking Stress Retention Rate (%) | PCT Treatment Time (hr.) | | | | | |
| | 0 | 100% | 100% | 100% | 100% | 100% |
| | 12 | 68% | 92% | 67% | 76% | 66% |
| | 24 | 37% | 83% | 64% | 68% | 50% |
| | 48 | 33% | 61% | 45% | 59% | 13% |

EP 3 919 547 A1

[Table 2]

| | | Comparative Example 1 | Comparative Example 2 |
|---|---|---|---|
| Polyol | | Not added | Bisphenol A Epoxy Acrylate |
| Hydroxyl Group Equivalent | | 0 | 242.3 |
| Cyanate Ratio (% by mass) | | 100.0 | 90.0 |
| Polyol Ratio (% by mass) | | 0 | 10.0 |
| [OH/OCN] | | 0 | 0.064 |
| Three Point Bending Breaking Stress (MPa) | PCT Treatment Time (hr.) | | |
| | 0 | 125 | 121 |
| | 12 | 123 | 121 |
| | 24 | 120 | 121 |
| | 48 | 114 | 110 |
| Three Point Bending Breaking Stress Retention Rate (%) | PCT Treatment Time (hr.) | | |
| | 0 | 100% | 100% |
| | 12 | 98% | 100% |
| | 24 | 96% | 100% |
| | 48 | 91% | 91% |

As evident from the table, the degradable resin compositions of the examples have a three point bending breaking stress retention rate of less than 90% after 24 hours, and have excellent hydrolyzability after 24 hours.

[Example 6]

To a planetary mixer (manufactured by PRIMIX, model number: HIVIS MIX 2P-03), 95.0 g of a prepolymer of 2,2-bis(4-cyanatophenyl)propane (cyanate equivalent: 139) (manufactured by Mitsubishi Gas Chemical Company, Inc., TA-1500 (product name)) was added as a cyanate ester compound, and molten by stirring at 80°C. Then, without adding any filler, 5.0 g of triisopropanolamine (manufactured by Tokyo Chemical Industry Co., Ltd.) was added as a trialkanolamine and stirred at 80°C to prepare a degradable resin composition.

[Example 7]

A degradable resin composition was prepared in the same manner as in Example 6 except that 17.6 g of sodium silicate (manufactured by Tokuyama Corporation, Purifeed powder, average particle size: 73 μm) was added as a filler (filler : components other than the filler in the composition = 15:85 (mass ratio)).

[Example 8]

A degradable resin composition was prepared in the same manner as in Example 6 except that 66.7 g of sodium silicate (manufactured by Tokuyama Corporation, Purifeed powder, average particle size: 73 μm) was added as a filler (filler : components other than the filler in the composition = 40:60 (mass ratio)).

[Example 9]

A degradable resin composition was prepared in the same manner as in Example 6 except that 17.6 g of sodium silicate (manufactured by Tokuyama Corporation, Purifeed powder, average particle size: 73 μm) and 34.6 g of glass fiber (manufactured by Nitto Boseki Co., Ltd., product number: SS15-404, milled fiber, mean fiber diameter: 11 μm,

mean fiber length: 500 $\mu$m, aspect ratio: 45, silane treatment of fiber surface) were added as a filler (sodium silicate : glass fiber : components other than the filler in the composition = 15:25:60 (mass ratio)).

[Example 10]

A degradable resin composition was prepared in the same manner as in Example 6 except that 34.6 g of glass fiber (manufactured by Nitto Boseki Co., Ltd., product number: SS15-404, milled fiber, mean fiber diameter: 11 $\mu$m, mean fiber length: 500 $\mu$m, aspect ratio: 45, silane treatment of fiber surface) was added as a filler (filler : components other than the filler in the composition = 15:85 (mass ratio)).

[Example 11]

A degradable resin composition was prepared in the same manner as in Example 6 except that 66.7 g of a sample (average particle size: 112 $\mu$m) obtained by treating potassium chloride (manufactured by Otsuka Chemical Co., Ltd., average particle size: 1.2 mm) with a grinder was added as a filler (filler : components other than the filler in the composition = 40:60 (mass ratio)).

<<Fabrication of Degradable Cured Product for Evaluation>>

The obtained degradable resin compositions were filled in a mold made of SUS304 and cured by a press molding machine at a pressure of 30 kgf/cm$^2$ and a temperature of 220°C for 90 minutes. After curing, the mold made of SUS304 was removed to obtain a cured plate.
From the obtained degradable cured products, samples (degradable cured products) of 40 mm $\times$ 10 mm $\times$ 1.5 mm and 10 mm $\times$ 10 mm $\times$ 3.5 mm were cut out and various measurements were performed.

(Compressive Strength)

For the obtained samples (degradable cured products) of 10 mm $\times$ 10 mm $\times$ 3.5 mm, the compressive strength was measured by the method of JIS K 7181, and the mean value (N=5) of the obtained compression strengths was calculated.

(Evaluation of Hydrolyzability (Weight Retention Rate))

The obtained samples (degradable cured products) of 40 mm $\times$ 10 mm $\times$ 1.5 mm were placed in Teflon (registered trademark) inner cylinder hermetic containers (manufactured by Taiatsu Techno Corporation (model: TAF-SR)), which were hermetically closed after adding 15 mL of distilled water, and then heated for 24 hours in a constant temperature bath at 149°C (300°F).
After a predetermined time, the samples were taken out, and filtered using a membrane filter having a hole diameter of 3 $\mu$m (manufactured by ADVANTEC), and the residue was vacuum dried at 100°C for 6 hours to calculate the dry mass.

$$\text{Mass retention rate (\%) = (dry mass / sample mass before heat treatment)} \times 100$$

[Table 3]

|  | Example 6 | Example 7 | Example 8 | Example 9 | Example 10 | Example 11 |
|---|---|---|---|---|---|---|
| Polyol | Triisoprop anolamine | Triisoprop anolamine | Triisoprop anolamine | Triisopropa nolamine | Triisopropa nolamine | Triisopropa nolamine |
| Hydroxyl Group Equivalent | 63.8 | 63.8 | 63.8 | 63.8 | 63.8 | 63.8 |

(continued)

| | | Example 6 | Example 7 | Example 8 | Example 9 | Example 10 | Example 11 |
|---|---|---|---|---|---|---|---|
| Polyol | | Triisoprop anolamine | Triisoprop anolamine | Triisoprop anolamine | Triisopropa nolamine | Triisopropa nolamine | Triisopropa nolamine |
| Cyanate Ratio (% by mass) | | 95.0 | 95.0 | 95.0 | 95.0 | 95.0 | 95.0 |
| Polyol Ratio (% by mass) | | 5.0 | 5.0 | 5.0 | 5.0 | 5.0 | 5.0 |
| OH/OCN | | 0.115 | 0.115 | 0.115 | 0.115 | 0.115 | 0.115 |
| Filler 1 | | Not added | Sodium Silicate | Sodium Silicate | Sodium Silicate | Not added | Potassium Chloride |
| Average Particle Size (μm) | | - | 73 | 73 | 73 | - | 112 |
| Filler 1 Ratio (% by mass) | | - | 15.0 | 40.0 | 15.0 | - | 40.0 |
| Filler 2 | | Not added | Not added | Not added | Glass fiber | Glass fiber | Not added |
| Mean Fiber Diameter (μm) | | - | - | - | 11 | 11 | - |
| Mean Fiber Length (μm) | | - | - | - | 500 | 500 | - |
| Aspect Ratio | | - | - | - | 45 | 45 | - |
| Filler 2 Ratio (% by mass) | | - | - | - | 25.0 | 25.0 | - |
| Compressi ve Strength | Mean Value (MPa) | 157 | 175 | 189 | 209 | 187 | 135 |
| Degradabi lity | Mass Retentio n Rate after 24 Hours in 149°C Hot Water | 79% | 67% | 43% | 67% | 94% | 55% |

As is evident from the table, it was found that the samples of Examples 7 to 10 in which a filler was used have excellent compressive strength as compared with Example 6 in which no filler was used, and that using a filler allows to control the degradability.

The disclosure of Japanese Patent Application No. 2019-017378 filed on February 1, 2019, and the disclosure of Japanese Patent Application No. 2019-174698 filed on September 25, 2019 are incorporated herein by reference in its entirety.

All literatures, patent applications, and technical standards described herein are incorporated herein by reference to the same extent as if each individual literature, patent application, or technical standard is specifically and individually indicated to be incorporated by reference.

**Claims**

1. A degradable resin composition comprising:

   a cyanate ester (A) and,
   a compound (B) having a hydroxyl group with a hydroxyl group equivalent of less than 240 g/eq.

2. The degradable resin composition according to claim 1, wherein the compound (B) comprises a polyol having two or more hydroxyl groups in one molecule.

3. The degradable resin composition according to claim 1 or 2, wherein the compound (B) comprises at least one or more compounds selected from a compound having an alcoholic hydroxyl group, a compound having a phenolic hydroxyl group, and a compound having an alcoholic hydroxyl group and a phenolic hydroxyl group.

4. The degradable resin composition according to any one of claims 1 to 3, wherein the compound (B) comprises at least one selected from the group consisting of an aliphatic polyol (b1), an alicyclic polyol (b2), an aromatic polyol (b3), and a trialkanolamine (b4).

5. The degradable resin composition according to claim 4, wherein the aliphatic polyol (b1) comprises at least one selected from the group consisting of ethanediol, propanediol, propanetriol, propanetetraol, butanediol, butanetriol, butanetetraol, pentanediol, pentanetriol, pentanetetraol, pentanepentaol, hexanediol, hexanetriol, hexanetetraol, hexanepentaol, hexanehexaol, diglycerol, ditrimethylolpropane, tritrimethylolpropane, dineopentylglycol, dipentaerythritol, tripentaerythritol, polyvinyl alcohol and polyvinyl acetal.

6. The degradable resin composition according to claim 4 or 5, wherein the alicyclic polyol (b2) comprises at least one selected from the group consisting of cyclopentanediol, cyclopentanetriol, cyclopentanetetraol, cyclopentanepentaol, cyclohexanediol, cyclohexanetriol, cyclohexanetetraol, cyclohexanepentaol, cyclohexanehexaol, hydrogenated bisphenol A, hydrogenated bisphenol B, hydrogenated bisphenol C, hydrogenated bisphenol E, hydrogenated bisphenol F, decahydronaphthalenediol, decahydronaphthalenetriol, and decahydronaphthalenetetraol.

7. The degradable resin composition according to any one of claims 4 to 6, wherein the aromatic polyol (b3) comprises at least one selected from the group consisting of dihydroxybenzene, trihydroxybenzene, tetrahydroxybenzene, pentahydroxybenzene, hexahydroxybenzene, bisphenol A, bisphenol B, bisphenol C, bisphenol E, bisphenol F, dihydroxybiphenyl, naphthalenediol, naphthalenetriol, and naphthalenetetraol.

8. The degradable resin composition according to any one of claims 4 to 7, wherein the trialkanolamine (b4) comprises at least one selected from the group consisting of trimethanolamine, triethanolamine, tripropanolamine, triisopropanolamine and tributanolamine.

9. The degradable resin composition according to any one of claims 1 to 8, further comprising at least any one of an inorganic filler and an organic filler as a filler.

10. The degradable resin composition according to claim 9, wherein the filler is a salt.

11. The degradable resin composition according to claim 10, wherein the salt is an alkali metal salt.

12. The degradable resin composition according to claim 11, wherein the alkali metal salt is water-soluble.

13. The degradable resin composition according to any one of claims 9 to 12, wherein the filler comprises: at least one of a hydrolyzable filler and a soluble filler; and a non-degradable filler.

14. The degradable resin composition according to any one of claims 1 to 13, wherein the equivalent ratio [OH/OCN] between the cyanato group [OCN] in the cyanate ester (A) and the hydroxyl group [OH] of the compound (B) is 0.02 to 1.0.

15. The degradable resin composition according to any one of claims 1 to 14, wherein a cured product obtained by curing the degradable resin composition is a degradable cured product that is degraded by hydrolysis.

**16.** A degradable cured product obtained by curing the degradable resin composition according to any one of claims 1 to 14.

**17.** The degradable cured product according to claim 16, which is degraded by hydrolysis.

**18.** A downhole tool for drilling comprising the degradable cured product according to claim 16 or 17.

## INTERNATIONAL SEARCH REPORT

| International application No. |
| --- |
| PCT/JP2020/003995 |

| A. CLASSIFICATION OF SUBJECT MATTER |
| --- |
| C08G 73/02(2006.01)i; C08G 73/06(2006.01)i; E21B 33/12(2006.01)i; E21B 43/26(2006.01)i; C08L 79/02(2006.01)i; C08K 3/34(2006.01)i<br>FI: C08G73/06; E21B33/12; E21B43/26; C08K3/34; C08G73/02; C08L79/02<br>According to International Patent Classification (IPC) or to both national classification and IPC |

| B. FIELDS SEARCHED |
| --- |
| Minimum documentation searched (classification system followed by classification symbols)<br>C08G73/02; C08G73/06; E21B33/12; E21B43/26; C08L79/02; C08K3/34 |

| Documentation searched other than minimum documentation to the extent that such documents are included in the fields searched |
| --- |
| Published examined utility model applications of Japan    1922-1996<br>Published unexamined utility model applications of Japan    1971-2020<br>Registered utility model specifications of Japan    1996-2020<br>Published registered utility model applications of Japan    1994-2020 |

| Electronic data base consulted during the international search (name of data base and, where practicable, search terms used)<br>CAplus/REGISTRY (STN) |
| --- |

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | US 2018/0305996 A1 (PING DUAN) 25.10.2018 (2018-10-25) claim 1 paragraphs [0031], [0040], [0042], [0055], [0059] | 1-4, 6, 7, 9, 14-18<br>10-13<br>5, 8 |
| Y | US 2017/0152371 A1 (DUAN, Ping) 01.06.2017 (2017-06-01) claims 1, 3, 9-11 paragraphs [0001], [0034], [0046] | 10-13 |
| X<br>A | US 4806621 A (KOHN, Joachim) 21.02.1989 (1989-02-21) claims 1, 3 column 7, lines 57-68 | 1-4, 7, 14-17<br>5, 6, 8-13, 18 |
| X<br>Y<br>A | JP 2001-62977 A (MITSUBISHI GAS CHEMICAL CO., INC.) 13.03.2001 (2001-03-13) claim 1, paragraphs [0001], [0010], [0013], examples 1, 4 | 1-6, 14-17<br>9-13<br>7, 8, 18 |

☒ Further documents are listed in the continuation of Box C.     ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>25 March 2020 (25.03.2020) | Date of mailing of the international search report<br>07 April 2020 (07.04.2020) |
| --- | --- |
| Name and mailing address of the ISA/<br>   Japan Patent Office<br>   3-4-3, Kasumigaseki, Chiyoda-ku,<br>   Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2020/003995

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2002-161183 A (SHOWA DENKO KABUSHIKI KAISHA) 04.06.2002 (2002-06-04) claims 1, 9, 10, 31, paragraphs [0030]-[0032], [0060] | 9-13 |
| Y | JP 9-217300 A (FUJI PHOTO FILM CO., LTD.) 19.08.1997 (1997-08-19) paragraph [0011] | 9-13 |
| X | CN 103172858 A (SUZHOU YIKETAI ELECTRONIC MATERIAL CO., LTD.) 26.06.2013 (2013-06-26) examples 1, 3 | 1-4, 8, 9, 14-17 |
| A | | 5-7, 10-13, 18 |
| A | US 2015/0252638 A1 (HALLIBURTON ENERGY SERVICES, INC.) 10.09.2015 (2015-09-10) all document | 1-18 |

Form PCT/ISA/210 (continuation of second sheet) (January 2015)

**INTERNATIONAL SEARCH REPORT**

Information on patent family members

| | | International application No. |
|---|---|---|
| | | PCT/JP2020/003995 |

| Patent Documents referred in the Report | Publication Date | Patent Family | Publication Date |
|---|---|---|---|
| US 2018/0305996 A1 | 25 Oct. 2018 | WO 2018/200108 A1 claims, paragraphs [0031], [0040], [0042], [0055], [0059] | |
| US 2017/0152371 A1 | 01 Jun. 2017 | WO 2017/095536 A1 claims 1, 3, 9-11, paragraphs [0001], [0034], [0046] CN 108473761 A | |
| US 4806621 A | 21 Feb. 1989 | (Family: none) | |
| JP 2001-62977 A | 13 Mar. 2001 | (Family: none) | |
| JP 2002-161183 A | 04 Jun. 2002 | (Family: none) | |
| JP 9-217300 A | 19 Aug. 1997 | US 5977019 A column 3, lines 27-55 | |
| CN 103172858 A | 26 Jun. 2013 | (Family: none) | |
| US 2015/0252638 A1 | 10 Sep. 2015 | WO 2014/197834 A1 all document | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016076390 A
- WO 2015099005 A
- US 20160369083 A
- WO 2017135168 A
- JP 2019017378 A
- JP 2019174698 A